**Europäisches Patentamt**

(19) **European Patent Office**

**Office européen des brevets**

(11) Veröffentlichungsnummer: **0 060 554**
**B1**

(12) # EUROPÄISCHE PATENTSCHRIFT

(45) Veröffentlichungstag der Patentschrift:
**12.09.84**

(51) Int. Cl.³: **G 11 B 3/62,** G 11 B 17/02

(21) Anmeldenummer: **82102115.1**

(22) Anmeldetag: **16.03.82**

(54) **Vorrichtung zum Ansaugen einer Platte auf dem Plattenteller eines Schallplattenspielers.**

(30) Priorität: **17.03.81 DE 8107646 U**

(43) Veröffentlichungstag der Anmeldung:
**22.09.82 Patentblatt 82/38**

(45) Bekanntmachung des Hinweises auf die Patenterteilung:
**12.09.84 Patentblatt 84/37**

(84) Benannte Vertragsstaaten:
**AT BE CH DE FR GB IT LI LU NL SE**

(56) Entgegenhaltungen:
**FR - A - 507 011**
**GB - A - 163 415**
**US - A - 2 386 166**
**US - A - 2 523 157**
**US - A - 3 608 909**
**US - A - 4 065 135**

**PATENTS ABSTRACTS OF JAPAN, Band 3, Nr.**
**146(E-156), 4. Dezemebr 1979, Seite 62E156**

(73) Patentinhaber: **PAN CONTACT GmbH, Schönbuchweg 5,**
**D-7031 Steinenbronn (DE)**

(72) Erfinder: **Schäfer, Norbert, Schönbornweg 18,**
**D-7239 Epfendorf-Thalhausen (DE)**

(74) Vertreter: **Weinmiller, Jürgen, Zeppelinstrasse 63,**
**D-8000 München 80 (DE)**

## Beschreibung

Die Erfindung betrifft eine Vorrichtung zum Ansaugen einer Platte auf dem Plattenteller eines Schallplattenspielers mit einer Saugpumpe, die über eine mit einem Einweg-Ventil versehene Saugleitung mit der Unterseite der Platte in Verbindung steht und mit einer ringförmigen Dichtung, die von unten an dem Aussenrand der Platte anliegt.

Aus der Druckschrift US-A 4065135 ist es bekannt, in einem Schallplattenspieler eine Saugpumpe vorzusehen, die über eine mit einem Ventil versehene Saugleitung mit einem in dem Plattenteller vorgesehenen Kanalsystem in Verbindung steht. Der Plattenteller weist an seinem Aussenumfang eine ringförmige Dichtung auf, die von unten an dem Aussenrand der Platte anliegt.

Eine an der Tellerachse vorgesehene Dichtungsscheibe dichtet das Achsenloch der Platte ab. Zwischen der Platte und dem Plattenteller kann auf diese Weise mittels der Saugpumpe ein Unterdruck erzeugt werden, der die Platte an dem Plattenteller angepresst hält.

Durch das Ansaugen der Platte an dem Plattenteller wird die Klangwiedergabe verbessert, da einerseits evtl. leichte Welligkeiten oder Verbiegungen der Platte ausgeglichen werden und da andererseits Schwingungen der Platte verhindert werden, wie sie bei einer frei aufliegenden und daher zwangsläufig nur punktweise vom Plattenteller unterstützten Platte in den nicht unterstützten Bereichen auftreten können.

Diese bekannte Ansaugvorrichtung ist in den Plattenspieler integriert. Der Erfindung liegt die Aufgabe zugrunde, eine Ansaugvorrichtung zu schaffen, die als Zubehörteil für jeden beliebigen Plattenspieler verwendbar ist.

Diese Aufgabe wird erfindungsgemäss dadurch gelöst, dass die eingangs erwähnte Vorrichtung gekennzeichnet ist durch eine scheibenförmige Tellerauflage, die im wesentlichen im Durchmesser mit der Platte übereinstimmt, die ein zentrisches, abgedichtetes Loch für die Tellerachse und deren Aussenumfang die ringförmige Dichtung aufweist, durch eine mit einem Dichtungsring auf den Innenrand der Platte aufsetzbare Saugglocke, die in ihrer der Platte zugewandten Bodenfläche ein zentrisches Loch für die Tellerachse und wenigstens eine Saugöffnung aufweist, und durch einen mit dem Einweg-Ventil versehenen Anschlussstutzen für die Saugleitung, der mit dem Raum zwischen der Platte und der Tellerauflage in Verbindung steht.

Vorteilhafte Ausführungsformen und Weiterbildungen der Erfindung sind in den Unteransprüchen angegeben.

Die erfindungsgemässe Vorrichtung stellt ein Zubehörteil dar, welches bei jedem handelsüblichen Plattenspieler verwendet werden kann. Die Tellerauflage wird auf den Plattenteller des handelsüblichen Plattenspielers aufgelegt, wobei das zentrische Loch der Tellerauflage gegen die Tellerachse nach unten abgedichtet ist. In dem zwischen der Tellerauflage und der auf diese aufgelegten Platte gebildeten Raum wird mittels der Saugpumpe der Unterdruck erzeugt. Die Saugglocke dient dabei als Abdichtung des Durchtritts der Tellerachse durch das Achsenloch der Platte.

Nach dem Auflegen der Platte auf die Tellerauflage wird diese mittels der externen Saugpumpe angesaugt. Zum Abspielen der Platte wird die Saugleitung der Saugpumpe von dem Anschlussstutzen abgenommen, wobei das Einweg-Ventil ein Einströmen von Luft in den Unterdruckraum verhindert.

Die Tellerauflage kann eine starre Scheibe sein, die durch einen Dichtungsring gegen die Tellerachse abgedichtet ist und an deren Aussenumfang die ringförmige Dichtung angebracht ist. Um die Laufqualität des Plattentellers nicht zu verschlechtern, besteht die Tellerauflage in diesem Fall z.B. aus Zinkdruckguss oder einem entsprechenden nicht magnetischen Werkstoff.

In einer wesentlich preiswerteren Ausführung besteht die Tellerauflage aus einem gummielastischen Material. In diesem Fall kann die Abdichtung gegen die Tellerachse durch eine einstückig mit der Tellerauflage aus diesem gummielastischen Material gebildete Dichtungslippe bewirkt werden. Auch die ringförmige Dichtung am Aussenumfang ist einstückig mit der Tellerauflage aus dem gummielastischen Material hergestellt. Die Tellerauflage wird in diesem Falle auf den Plattenteller aufgeklebt, um die Laufeingenschaften des Plattentellers nicht zu verschlechtern. Zu diesem Zweck kann die Tellerauflage an der Unterseite eine klebfähige Beschichtung aufweisen oder mittels einer doppelseitig klebenden Folie aufgeklebt werden.

Um trotz der unvermeidlichen Leckrate der Abdichtungen zwischen Tellerauflage und Aussenrand der Platte, zwischen Tellerauflage und Plattenachse und zwischen Saugglocke und Platte den für das Ansaugen der Platte erforderlichen Unterdruck über die gesamte Abspieldauer der Platte aufrechtzuerhalten, ist ein ebenfalls unter Unterdruck stehendes Puffervolumen vorgesehen. Dieses Puffervolumen wird im einfachsten Falle durch die kuppelförmige Ausbildung der Saugglocke erhalten. Es ist aber bei einer starren Ausbildung der Tellerauflage auch möglich, diese mit einem Innenhohlraum z.B. doppelwandig auszubilden, wobei der Innenhohlraum mit dem Unterdruckraum zwischen Platte und Tellerauflage in Verbindung steht.

Der Anschlussstutzen für die Saugpumpe ist konstruktiv am einfachsten an der Saugglocke angeordnet. Ist die Tellerauflage mit einem Innenhohlraum als Puffervolumen versehen, so kann der Anschlussstutzen auch am Aussenumfang der Tellerauflage angebracht sein und radial in diesen Innenhohlraum münden. Es besteht schliesslich auch die Möglichkeit, den Anschlussstutzen am Aussenumfang der Tellerauflage anzuordnen und über eine Bohrung in der Tellerauflage mit dem Raum zwischen diesem und der Platte zu verbinden. Um einen gleichmässigen Unterdruck über die gesamte Plattenfläche zu erhalten, ist dabei zweckmässigerweise eine ringsumlaufende Nut in der Oberfläche der Tellerauflage vorgesehen, in welche die von dem Anschlussstutzen kommende Bohrung mündet. Diese Nut kann beispielsweise ein V-förmiger Einstich sein, in welchen eine Rundschnurdichtung als ringförmige Dichtung eingelegt ist.

Zweckmässigerweise kann die Saugglocke mit einem Belüftungsventil versehen sein, um das Abnehmen der Saugglocke und der Platte nach dem Abspielen zu erleichtern.

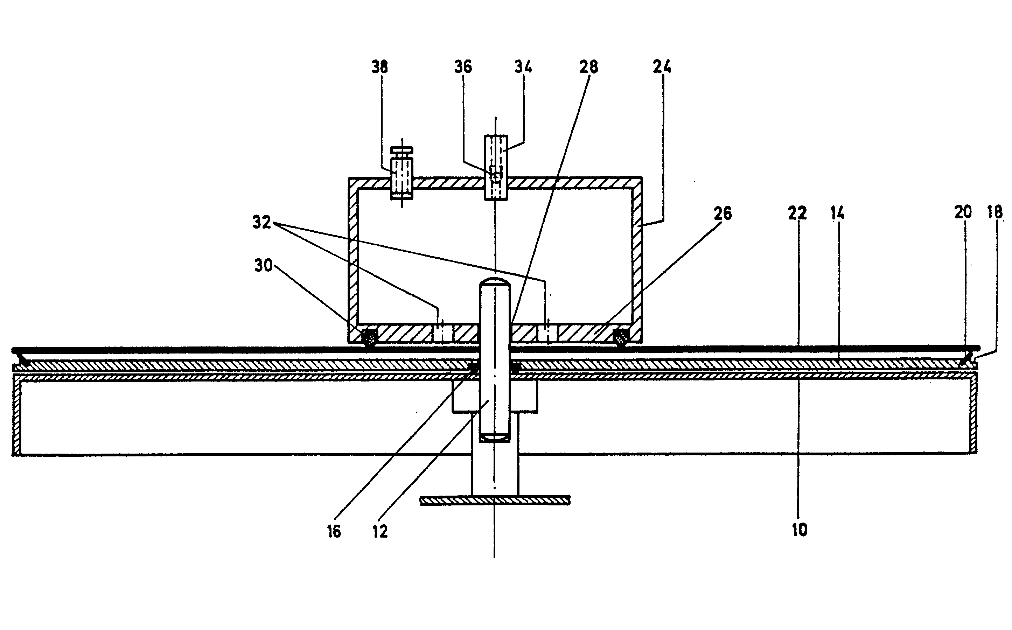

Nachfolgend wird ein in der Zeichnung dargestelltes Ausführungsbeispiel der Erfindung näher erläutert. Die einzige Figur zeigt einen vertikalen Axialschnitt durch einen mit der erfindungsgemässen Vorrichtung versehenen Plattenteller eines herkömmlichen Plattenspielers.

Von einem handelsüblichen Plattenspieler ist in der Zeichnung nur der Plattenteller 10 und die durch diesen nach oben ragende Tellerachse 12 gezeigt.

Auf den Plattenteller 10 wird eine scheibenförmige Tellerauflage 14 aufgelegt. Die Tellerauflage 14 entspricht in ihrem Durchmesser dem Plattenteller 10 bzw. den genormten Platten. Die Tellerauflage 14 sitzt mit einem zentrischen Loch auf der Tellerachse 12, wobei ein Dichtungsring 16, z.B. ein O-Ring, eine Abdichtung zwischen Tellerauflage 14 und Tellerachse 12 bewirkt. Die Tellerauflage 14 besteht z.B. aus Zinkdruckguss oder einem entsprechenden nicht magnetischen Werkstoff, damit die Laufqualität des Plattentellers 10 nicht verschlechtert wird.

Am Aussenumfang weist die Tellerauflage 14 an ihrer Oberseite eine stufenförmige Ausdrehung 18 auf. In der oberen Umfangskante dieser Ausdrehung 18 ist ein schräger Einstich vorgesehen, in dem eine ringförmig um den Umfang der Tellerauflage 14 verlaufende Dichtungslippe 20 aus einem gummielastischen Material eingesetzt ist.

Auf die Tellerauflage 14 wird die abzuspielende Platte 22 aufgelegt, wobei sich die Dichtungslippe 20 von unten an dem nicht mit der Tonspur versehenen Aussenrand der Platte 22 anlegt. Beim später beschriebenen Ansaugen der Platte 22 an die Tellerauflage 14 drückt die Platte 22 die Dichtungslippe 20 nach unten. Da die Dichtungslippe 20 schräg nach oben und radial nach aussen über die Ausdrehung 18 hinaus ragt, kann sie gegen ihre Eigenelastizität durch den Rand der Platte 22 frei nach unten gedrückt werden, so dass sie sich über den gesamten Umfang gut dichtend an den Rand der Platte 11 anlegen kann. Der untere radial überstehende Rand der Ausdrehung 18 ragt radial auch über die Dichtungslippe 20 hinaus und schützt diese vor mechanischer Beschädigung. Die vom Plattenspieler abgenommene Tellerauflage 14 kann auf diese Weise z.B. vertikal stehend gelagert werden.

In einer insbesondere aus Kostengründen bevorzugten Ausführungsform besteht die Tellerauflage 14 aus einem gummielastischen Material und wird z.B. mittels einer doppelseitigen klebenden Folie auf den Plattenteller 10 geklebt. Die Dichtungslippe 20 ist dabei einstückig mit der Tellerauflage 14 ausgebildet. Der Dichtungsring 16 wird dabei ebenfalls durch eine an der Tellerachse 12 anliegende Dichtungslippe ersetzt, die einstückig mit der Tellerauflage 14 ausgebildet ist.

Auf die Platte 22 wird von oben eine Saugglocke 24 aufgesetzt. Die kuppelförmige Saugglocke 24 hat die Form eines oben und unten geschlossenen Zylinders. Ihr Durchmesser entspricht im wesentlichen dem Durchmesser der Etiketten genormter Schallplatten. In der unteren, der Platte 22 zugewandten Bodenfläche 26 ist ein zentrisches Loch 28 vorgesehen, durch welches die Tellerachse 12 zur Zentrierung und Halterung der Saugglocke 24 durchtritt. In einer längs des Umfangs dieser unteren Bodenfläche 26 verlaufenden Nut sitzt ein Dichtungsring 30, z.B. ein O-Ring, der die Abdichtung zwischen Saugglocke und Platte 22 bewirkt. Zwei Saugöffnungen 32 in der Bodenfläche 26 stellen die Verbindung des Innenvolumens der Saugglocke 24 mit dem Raum zwischen der Saugglocke 24 und der Platte 22 und über das Achsenloch der Platte 22 mit dem Raum zwischen der Platte 22 und der Tellerauflage 14 her.

Die untere Bodenfläche der Saugglocke 24 kann auch vollständig offen sein, so dass keine Saugöffnungen 32 vorgesehen werden müssen. Das zentrische Loch 28 ist dann an einem von der oberen Deckfläche nach unten führenden Vorsprung der Saugglocke 24 ausgebildet.

In die obere Deckfläche der Saugglocke 24 ist ein Anschlussstutzen 34 eingesetzt, der ein Einweg-Ventil 36 enthält. An den Anschlussstutzen 34 wird abnehmbar eine nicht dargestellte Saugleitung einer ebenfalls nicht dargestellten Saugpumpe angeschlossen. Das Einweg-Ventil 36 sorgt dafür, dass über den Anschlussstutzen 34 zwar Luft aus der Saugglocke 24 abgepumpt werden kann, ein Einströmen von Luft nach dem Abnehmen der Saugleitung beim Abspielen der Platte 22 jedoch verhindert wird.

In der oberen Deckfläche der Saugglocke 24 ist weiter ein Belüftungsventil 38 vorgesehen. Dieses Belüftungsventil 38 ermöglicht z.B. durch Niederdrücken eines Betätigungsknopfes ein Belüften der Saugglocke 24, wenn diese nach dem Abspielen der Platte 22 abgenommen werden soll.

In der oberen Oberfläche der Tellerauflage 14 sind radiale Lüftungsnuten vorgesehen, die von dem zentrischen Loch der Tellerauflage 14 ausgehen und bis nahezu zu der Dichtungslippe 20 verlaufen. Diese Lüftungsnuten bewirken, dass die Luft auch aus den radial äusseren Bereichen zuverlässig zwischen der Tellerauflage 14 und der Platte 22 abgesaugt wird, selbst wenn die Platte 22 in ihren radial inneren Bereichen bereits dicht an der Tellerauflage 14 anliegt.

## Patentansprüche

1. Vorrichtung zum Ansaugen einer Platte (22) auf dem Plattenteller (10) eines Schallplattenspielers mit einer Saugpumpe, die über eine mit einem Einweg-Ventil versehene Saugleitung mit der Unterseite der Platte in Verbindung steht und mit einer ringförmigen Dichtung (20), die von unten an dem Aussenrand der Platte anliegt, gekennzeichnet durch eine scheibenförmige Tellerauflage (14), die im wesentlichen im Durchmesser mit der Platte (22) übereinstimmt, die ein zentrisches, abgedichtetes Loch für die Tellerachse (12) und deren Aussenumfang die ringförmige Dichtung aufweist, durch eine mit einem Dichtungsring (30) auf den Innenrand der Platte (22) aufsetzbare Saugglocke (24), die in ihrer der Platte (22) zugewandten Bodenfläche (26) ein zentrisches Loch (28) für die Tellerachse (12) und wenigstens eine Saugöffnung (32) aufweist, und durch einen mit dem Einweg-Ventil (36) versehenen Anschlussstutzen (34) für die Saugleitung, der mit dem Raum zwischen der Platte (22) und der Tellerauflage (14) in Verbindung steht.

2. Vorrichtung nach Anspruch 1, dadurch gekennzeichnet, dass die ringförmige Dichtung eine Dichtungslippe (20) ist, die schräg nach oben über den Aussenumfang der Tellerauflage (14) hinausragt.

3. Vorrichtung nach Anspruch 2, dadurch gekennzeichnet, dass die Tellerauflage (14) an ihrer Oberseite eine Ausdrehung (18) ihres Aussenumfanges aufweist und die Dichtlippe (20) über diese Ausdrehung (18) hinausragt.

4. Vorrichtung nach einem der Ansprüche 1 bis 3, dadurch gekennzeichnet, dass die Tellerauflage (14) eine starre Scheibe ist, dass die ringförmige Dichtung in einem Einstich am Aussenumfang der Tellerauflage (14) sitzt und dass das Loch der Tellerauflage (14) für die Tellerachse (12) durch einen Dichtungsring (16) abgedichtet ist.

5. Vorrichtung nach den Ansprüchen 2 und 4, dadurch gekennzeichnet, dass ein schräger Einstich am Aussenumfang der Tellerauflage (14) vorgesehen ist, in welchem die Dichtungslippe (20) sitzt.

6. Vorrichtung nach einem der Ansprüche 1 bis 3, dadurch gekennzeichnet, dass die Tellerauflage (14) aus gummielastischem Material besteht und dass die ringförmige Dichtung und eine das Loch für die Tellerachse (12) abdichtende Dichtungslippe einstückig mit der Tellerauflage (14) ausgebildet sind.

7. Vorrichtung nach Anspruch 6, dadurch gekennzeichnet, dass die Tellerauflage (14) an ihrer Unterseite eine Haftschicht, insbesondere eine Klebbeschichtung oder eine doppelseitig klebende Folie aufweist.

8. Vorrichtung nach einem der vorhergehenden Ansprüche, dadurch gekennzeichnet, dass der Anschlussstutzen (34) für die Saugleitung in die Saugglocke (24) mündet.

9. Vorrichtung nach Anspruch 4, dadurch gekennzeichnet, dass ein V-förmiger Einstich längs des Umfangs in der Oberfläche der Tellerauflage (14) vorgesehen ist, dass die ringförmige Dichtung eine in diesem Einstich liegende Rundschnurdichtung ist und dass der Grund des Einstichs einerseits über eine Bohrung mit dem am Aussenumfang der Tellerauflage (14) angebrachten Anschlussstutzen und andererseits über wenigstens eine Bohrung mit dem Raum zwischen Platte (22) und Tellerauflage (14) in Verbindung steht.

10. Vorrichtung nach Anspruch 1, dadurch gekennzeichnet, dass die Saugglocke (24) kuppelförmig ausgebildet ist.

11. Vorrichtung nach Anspruch 10, dadurch gekennzeichnet, dass die Saugglocke (24) Zylinderform aufweist.

12. Vorrichtung nach Anspruch 1, dadurch gekennzeichnet, dass die Tellerauflage eine starre, einen Innenhohlraum aufweisende Scheibe ist, deren Innenhohlraum mit dem Raum zwischen Platte (22) und Tellerauflage in Verbindung steht.

13. Vorrichtung nach Anspruch 12, dadurch gekennzeichnet, dass der Anschlussstutzen am Aussenumfang der Tellerauflage angeordnet ist und radial in den Innenhohlraum mündet.

14. Vorrichtung nach Anspruch 1, dadurch gekennzeichnet, dass die Saugglocke (24) ein Belüftungsventil (38) aufweist.

15. Vorrichtung nach Anspruch 1, dadurch gekennzeichnet, dass in der oberen Oberfläche der Tellerauflage (14) von der Mitte ausgehende radiale Lüftungsnuten vorgesehen sind.

## Claims

1. A device for retaining by suction a record (22) on the turntable (10) of a record player, with a suction pump, which is connected via a suction conduit and a one-way-valve to the lower surface of the record, and with an annular seal (20), which is applied from underneath to the outer rim of the record, characterized by a disk-shaped support (14), the diameter of which coincides generally with that of the record (22), comprising a central sealed hole for the turntable axis (12) and bearing on its periphery the annular seal, by a bell-shaped suction cover (24) mountable on the inner rim of the record (22) by means of a sealing ring (30), and having at its bottom (26) turned towards the record (22) a central hole (28) for the turntable axis (12) and at least one suction opening (32), and by a suction conduit connection socket (34) bearing the one-way-valve (36), and communicating with the space between the record (22) and the support (14).

2. A device according to claim 1, characterized in that the annular seal is a sealing lip (20), which protrudes slantingly upwards over the periphery of the support (14).

3. A device according to claim 2, characterized in that the support (14) comprises on its upper side a recess (18) on its periphery and that the sealing lip (20) protrudes over this recess (18).

4. A device according to one of the claims 1 to 3, characterized in that the support (14) is a rigid disk, that the annular seal is placed in a groove on the periphery of the support (14) and that the hole in the support (14) for the turntable axis (12) is sealed by a packing ring (16).

5. A device according to claims 2 and 4, characterized in that a slanting groove is provided on the periphery of the support (14) which contains the sealing lip (20).

6. A device according to one of the claims 1 to 3, characterized in that the support (14) is made of rubber elastic material and that the annular seal and a packing lip sealing the hole for the turntable axis (12) are integral with said support (14).

7. A device according to claim 6, characterized in that the support (14) comprises on its lower side an adhesive layer, in particular a gluing layer or a double-sided adhesive tape.

8. A device according to one of the preceding claims, characterized in that the connection socket (34) for the suction conduit is mounted on the suction cover (24).

9. A device according to claim 4, characterized in that a V-shaped groove is provided along the periphery in the surface of the support (14), in that the annular seal is a circular cord seal lying in this groove and the bottom of the groove is connected on the one hand via a drilling with the connection socket on the periphery of the support and on the other hand via at least one drilling with the space between the record (22) and the support (14).

10. A device according to claim 1, characterized in that the suction cover (24) is dome-shaped.

11. A device according to claim 10, characterized in that the suction cover (24) is cylinder-shaped.

12. A device according to claim 1, characterized in that the support is a rigid disk with an inner cavity, the cavity communicating with the space between the record (22) and the support.

13. A device according to claim 12, characterized in that the connection socket is situated at the periphery of the support and penetrates radially into the inner cavity.

14. A device according to claim 1, characterized in that the suction cover (24) contains a vent valve (38).

15. A device according to claim 1, characterized in that the upper surface of the support (14) shows radial aeration notches parting from the centre.

**Revendications**

1. Dispositif pour l'aspiration d'un disque (22) sur la platine (10) d'un tourne-disque, comportant une pompe d'aspiration, qui est liée par un conduit d'aspiration ayant une soupape antiretour à la face inférieure du disque, et comportant un joint annulaire (20), qui est en contact avec la bordure inférieure du disque, caractérisé par une couverture circulaire (14) pour la platine, cette couverture ayant un diamètre qui correspond approximativement au diamètre du disque (22) et étant munie d'un trou central pour le passage étanche de l'axe (12) de la platine, ledit joint annulaire étant disposé sur le périmètre de cette couverture, par une cloche d'aspiration (24), qui peut être posée sur la bordure centrale du disque (22) par l'intermédiaire d'un anneau d'étanchéité (30) et qui présente dans son fond (26) en face du disque (22) un trou central (28) pour l'axe de la platine (12) et au moins une ouverture d'aspiration (32), et par un manchon (34) de connexion pour le conduit d'aspiration, ce manchon étant muni d'une soupape antiretour (36) communiquant avec l'espace situé entre le disque (22) et la couverture (14) de la platine.

2. Dispositif selon la revendication 1, caractérisé en ce que le joint annulaire (20) est constitué d'une lèvre d'étanchéité qui dépasse obliquement vers le haut le périmètre extérieur de la couverture (14) de la platine.

3. Dispositif selon la revendication 2, caractérisé en ce que la couverture (14) présente sur sa face supérieure un périmètre en recul (18) et que la lèvre (20) s'étend au-delà de ce périmètre en recul (18).

4. Dispositif selon l'une des revendications 1 à 3, caractérisé en ce que la couverture (14) de la platine est constituée d'une plaque rigide, que le joint annulaire est logé dans une cannelure le long du périmètre de la couverture (14) et que le trou dans la couverture (14) pour le passage de l'axe (12) de la platine est rendu étanche par une bague d'étanchéité (16).

5. Dispositif selon les revendications 2 et 4, caractérisé en ce qu'on prévoit une cannelure oblique sur le périmètre de la couverture (14) pour loger ladite lèvre d'étanchéité (20).

6. Dispositif selon l'une des revendications 1 à 3, caractérisé en ce que la couverture (14) est faite en un matériau élastique et que le joint annulaire et un joint pour rendre étanche le passage de l'axe (12) de la platine sont d'un seul tenant avec la couverture (14).

7. Dispositif selon la revendication 6, caractérisé en ce que la couverture (14) porte sur sa face inférieure une couche antiglissante, en particulier une couche adhésive ou une feuille à effet adhésif sur ses deux faces.

8. Dispositif selon l'une des revendications précédentes, caractérisé en ce que le manchon de connexion (34) au conduit d'aspiration débouche dans la cloche (24).

9. Dispositif selon la revendication 4, caractérisé en ce qu'une cannelure annulaire est ménagée le long du périmètre dans la face supérieure de la couverture (14), que le joint annulaire est une tresse circulaire, qui est logée dans cette cannelure, et que le fond de cette cannelure communique d'une part à travers une canalisation avec le manchon qui est disposé sur le périmètre extérieur de la couverture (14), et d'autre part à travers au moins une canalisation avec l'espace entre le disque (22) et la couverture (14).

10. Dispositif selon la revendication 1, caractérisé en ce que la cloche d'aspiration (24) présente la forme d'une coupole.

11. Dispositif selon la revendication 10, caractérisé en ce que la cloche d'aspiration (24) présente la forme d'un cylindre.

12. Dispositif selon la revendication 1, caractérisé en ce que la couverture est constituée d'une plaque rigide présentant une cavité interne, cette cavité interne communiquant avec l'espace entre le disque (22) et la couverture.

13. Dispositif selon la revendication 12, caractérisé en ce que le manchon est disposé sur le périmètre extérieur de la couverture et débouche radialement dans la cavité interne.

14. Dispositif selon la revendication 1, caractérisé en ce que la cloche d'aspiration (24) comporte une soupape d'aération (38).

15. Dispositif selon la revendication 1, caractérisé en ce que la surface supérieure de la couverture (14) comporte des rainures radiales d'aération qui partent du centre.